# EUROPEAN PATENT APPLICATION

(11) **EP 1 583 277 A1**
(43) Date of publication of application: **05.10.2005**
(21) Application number: 04007874.3
(22) Date of filing: 31.03.2004
(51) Int. Cl.: H04L 1/20, H04L 1/06, H04L 27/26, H04B 7/06

(54) **MIMO-OFDM backward-compatible transmission system**

(71) Applicant: Infineon Technologies AG, 81669 München (DE)
(72) Inventor: Lewis, Michael, 195 52 Märsta (SE)
(74) Representative: Graf Lambsdorff, Matthias

(57) **Abstract**

The present invention relates to a transmitter (54) in a transmission system (50) operable to optimise estimates of a quantity at a receiver for improved operation. Said transmission system (50) comprises a transmitting means (54) connected to a number of antennas (Txm), and a to said transmitting means (854) connected control means (52). The control means (52) controls the transmitting means (54) to initially transmit an initial training/quantity estimation sequence during an initial training/quantity estimation phase and subsequently transmit a sequence of data symbols such that the information rate of the data symbols is progressively increased.

## Description

### Field of invention

The present invention relates in first aspect to a transmitter in a transmission system operable to optimise estimates of a quantity at a receiver.

In a second aspect, the present invention relates to an optimisation system operable to optimise estimates of a quantity at a receiver.

In a third aspect, the present invention relates to a method at a transmitter to allow for the optimisation of estimates of a quantity at a receiver.

In a fourth aspect, the present invention relates to at least one computer program product for performing a method at a transmitter to allow for the optimisation of estimates of a quantity at a receiver.

In a fifth aspect, the present invention relates to a method for optimisation of estimates of a quantity at a receiver.

In a sixth aspect, the present invention relates to at least one computer program product for performing a method for optimisation of estimates of a quantity at a receiver.

In a seventh aspect, the present invention relates to a transmitter in a transmission system operable to optimise estimates of a channel transfer function at a receiver.

In a eighth aspect, the present invention relates to an optimisation system operable to optimise estimates of a channel transfer function at a receiver.

In a ninth aspect, the present invention relates to a method at a transmitter for optimising estimates of channel transfer functions at a receiver.

In a tenth aspect, the present invention relates to at least one computer program product for performing a method at a transmitter for optimising estimates of channel transfer functions at a receiver.

In an eleventh aspect, the present invention relates to a method for optimising estimates of channel transfer functions at a receiver.

In a twelfth aspect, the present invention relates to at least one computer program product for optimising estimates of channel transfer functions at a receiver.

In a thirteenth aspect, the present invention relates to a transmitter in a transmission system operable to optimise estimates of channel transfer functions at a receiver.

In a fourteenth aspect, the present invention relates to a receiver in a transmission system operable to optimise estimates of channel transfer functions.

In a fifteenth aspect, the present invention relates to a method at a transmitter for allowing optimized estimates of channel transfer functions at a receiver.

In a sixteenth aspect the present invention relates to at least one computer program product for performing a method at a transmitter for allowing optimized estimates of channel transfer functions at a receiver.

In a seventeenth aspect, the present invention relates to a method at a receiver for producing optimized estimates of channel transfer functions.

In an eighteenth aspect, the present invention relates to at least one computer program product for performing a method at a receiver for producing optimized estimates of channel transfer functions.

### Background of the invention

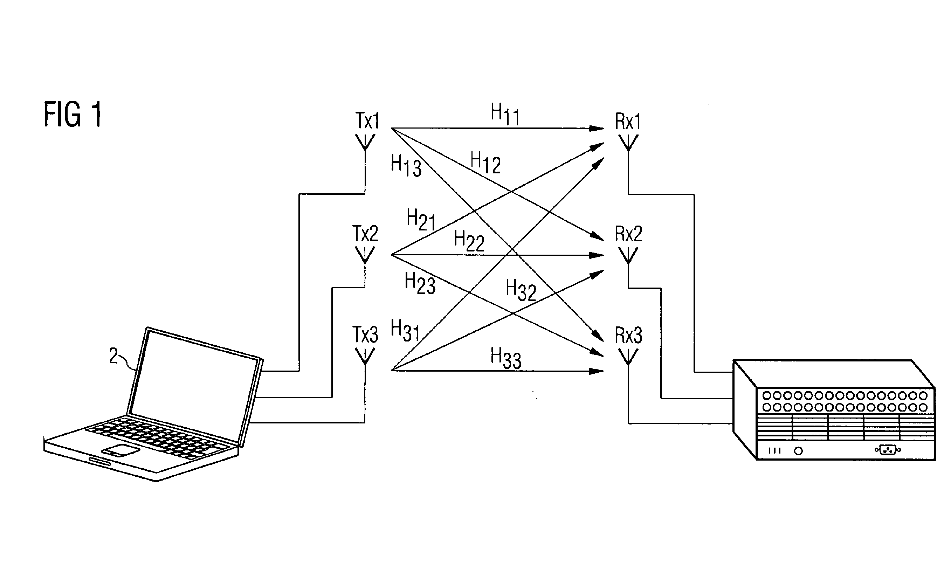

The IEEE 802.11 wireless LAN standardisation process recently created the "high throughput" task group, which aims to generate a new standard for wireless LAN systems with a measured throughput of greater than 100Mbit/s. The dominant technology that promises to be able to deliver these increased speeds are so-called MIMO (multiple-input, multiple-output) systems. MIMO systems are defined by having multiple antennae used for both transmission and reception. The maximum theoretical throughput of such a system scales linearly with the number of antennae, which is the reason that the technology is of great interest for high throughput applications. An example of such a system is shown in Figure 1, with a laptop 2 transmitting to an access point where each device has three antennae.

The reason why these systems can offer improved throughput compared to single antenna systems, is that there is *spatial redundancy*: each piece of information transmitted from each transmitting antenna travels a different path to each receiving antenna, and experiences distortion with different characteristics (different *channel transfer functions*) In the example of Figure 1, there are three different channel transfer functions from each antenna to each receiver: the transfer function from transmitting antenna *x* to receiving antenna *y* is denoted by *H*_{*xy*}. Greater capacity is obtained by making use of the spatial redundancy of these independent or semi-independent channels (perhaps in conjunction with other coding techniques) to improve the chance of successfully decoding the transmitted data. The examples given here use three transmitting antennae. However, any arbitrary number of transmit antennae can be used.

There are a wide range of published techniques for encoding information over a MIMO channel set, e.g. linear beamforming with a Wiener filter receiver, space time block coding, etc. In virtually all of the techniques, it is necessary to obtain a reasonably accurate estimate of the channel transfer functions at least at the receiver. In some of the techniques, channel transfer function estimates must also be available at the transmitter: it is possible to encode the estimated transfer function at the receiver and send it back to the transmitter if the channel transfer functions change sufficiently slowly with time.

An important criterion of the high-throughput WLAN standardisation activity is that the new systems can interoperate with existing 802.11a and 802.11g OFDM WLAN systems. This means, primarily, that the legacy systems can interpret sufficient information from the transmission of the new system such that they do not interact in a negative manner (e.g. making sure that legacy systems remain silent during an ongoing transmission of the new system). For this reason, it has been proposed that the new high-throughput standard uses the same preamble structure as for 802.11a/g. The preamble is the information transmitted before the data-carrying portion of a transmission, which allows the transmission to be detected and allows estimation of, amongst other things, the channel transfer function. The aim is that the transmitted preambles will be sufficiently similar that legacy devices can determine the presence and duration of a high-throughput transmission.

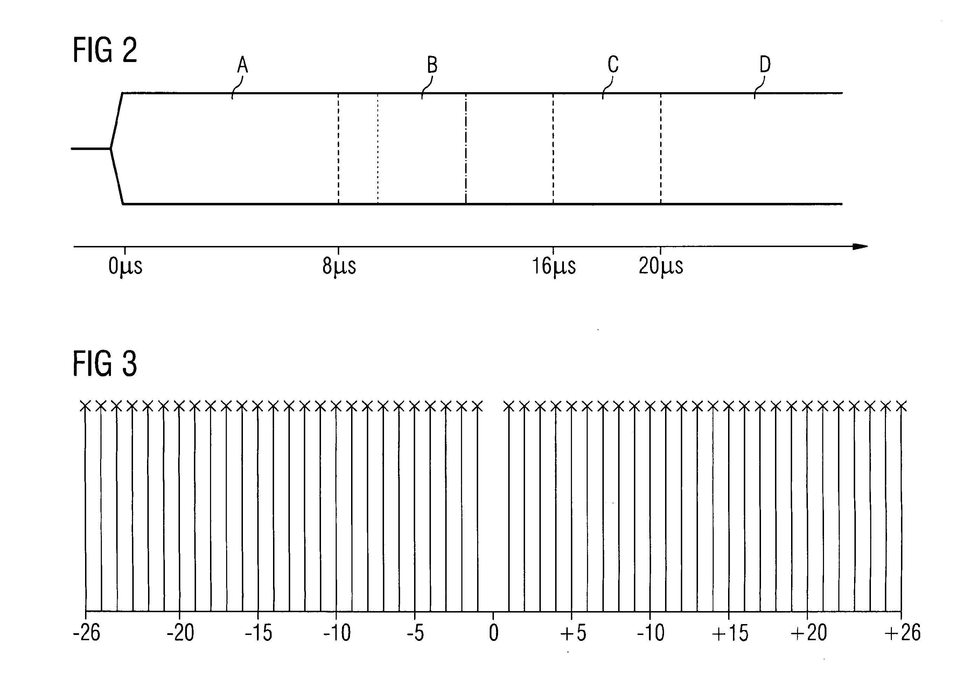

A representation of an IEEE 802.11a/g OFDM preamble is shown in Figure 2. The first portion of the preamble consists of 10 repetitions of a short 0.8*µ*s long sequence known as the short preamble symbol A. These are used to detect the presence of an incoming signal and to perform initial estimations of, for example, carrier frequency offset.

The second portion B of the preamble uses the same sort of transmission as the OFDM symbols that are used to carry data in the payload of the transmission. The symbols are 3.2*µ*s long, and are made up of 52 subcarriers with a spacing of 0.3125MHz, as shown in Figure 3. The preamble consists of 2 repetitions of a known 3.2*µ*s training symbol, preceded by a 1.6*µ*s cyclic prefix (a copy of the last half of a training symbol prepended to the sequence). These OFDM training symbols are used to perform an estimate of the channel transfer function from the transmitting antenna to each receiving antenna. The cyclic prefix CP means that each OFDM subcarrier experiences a flat fading channel (for sufficiently short channel delay spreads). Flat fading means that the channel transfer function for the signal on each subcarrier can be represented purely by a phase rotation and a scaling of amplitude. These amplitude and phase changes for each subcarrier can readily be estimated when the received signal is transformed into the frequency domain (e.g. via the FFT).

The final portion of the preamble, known as the SIGNAL field C, is a single OFDM data symbol (3.2*µ*s long with a 0.8*µ*s cyclic prefix) modulated using BPSK, the most robust transmission mode defined in the standard. This contains details of what modulation format is used for the rest of the transmission, as well as the overall length of the transmission.

D represents the data symbols.

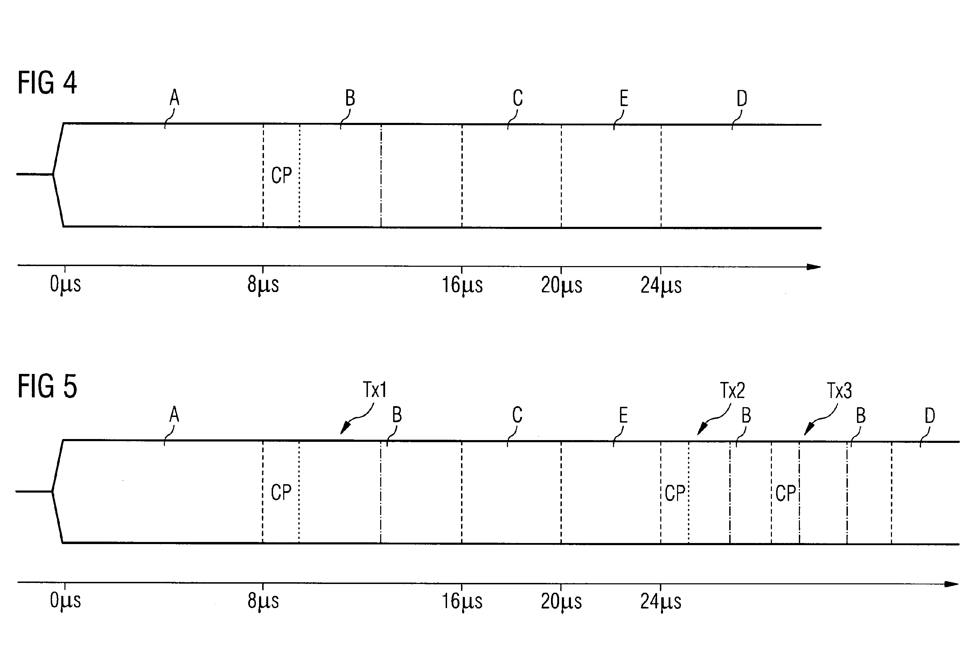

There are two primary difficulties in implementing a MIMO system that is interoperable with legacy 11a/11g devices. Firstly, it is necessary to be able to signal that the new MIMO transmission methods are being used while also allowing legacy devices to gather sufficient information of the transmission in progress. This can be done in a straightforward manner: there are unused portions of the 802.11a/11g SIGNAL field, which are defined as reserved (not used in transmission, and ignored on reception). These portions can be used to flag the use of a new transmission mode, while the rate and length information contained in the SIGNAL field can be used to indicate the duration of the transmission. For MIMO devices, this first signal field can then be followed by another signal field, shown in Figure 4 with the second signal field denoted as SIGNAL2, E.

These portions of the preamble structures in Figures 2 and 4 which corresponds to each other have been denoted with the same reference letter.

The legacy device will thereby interpret the SIGNAL C field correctly (ignoring the reserved sections): the remainder of the frame will not be correctly received, but the legacy device will recognise that a transmission is underway and know what the duration of the transmission is. A non-legacy device will interpret both SIGNAL, C and SIGNAL2, E, using the SIGNAL2 field, E to configure the operating mode for the remainder of the transmission (perhaps in conjunction with information from the SIGNAL field C).

A more complicated problem is the task of creating the estimates of the channel transfer function from each transmitting antenna to each receiving antenna. Techniques exists whereby the transfer function at the receiver can be estimated with transmission occurring on all antennae simultaneously; however, these techniques are not compatible with the existing 11a/11g preamble structure. The alternative is that transmissions on each antenna are separated, in time and / or in frequency.

Probably the simplest way to generate channel estimates for each transmit antenna is to separate the transmissions in time. The initial preamble is transmitted on a single antenna. This will allow legacy devices to receive the preamble, and will allow MIMO devices to estimate the channel transfer function from the first transmitting antenna to each receiving antenna. Subsequently, long training symbols can be repeated on each of the other transmit antennae, allowing the channel transfer functions to be estimated from each of the remaining transmit antennae to each receive antenna.

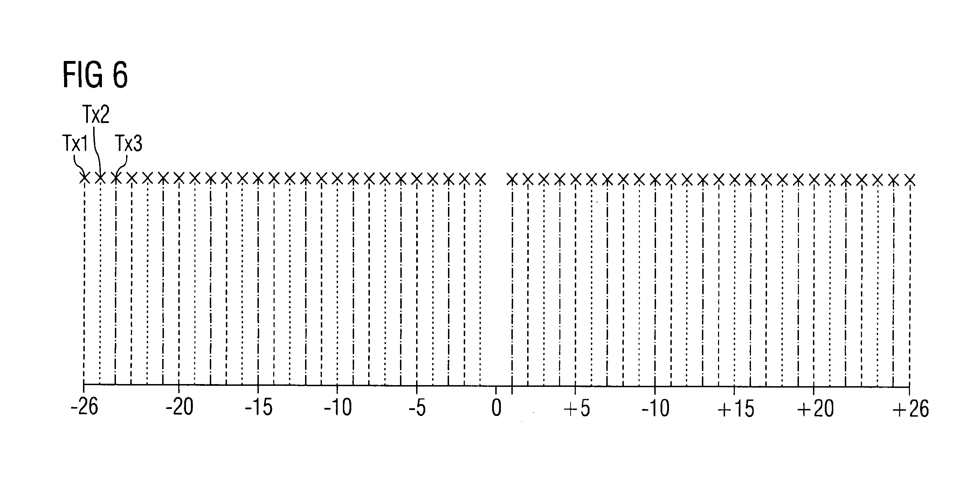

An example of one possible preamble structure using this method is shown in Figure 5. Here, everything up to the SIGNAL2 field are transmitted on antenna 1, and antennae 2 and 3 then transmit copies of the training sequence (the chosen order of the training sequences and the SIGNAL2 field is unimportant, as long as it is standardised).

An alternative to separating the transmissions in time is to separate the transmissions on each antenna in frequency, so that a given antenna is the only one transmitting on a given subcarrier at a given time, and to use the standard 802.11a/g preamble. An example of a possible distribution is shown in Figure 6. The subcarrier / Tx antenna distribution can either be used for the whole preamble, or can be used for the long training symbols and the SIGNAL / SIGNAL2 fields only. The channel spacing is 0.3125 MHz.

From the point of view of a legacy device, there is a unique transfer function for each subcarrier that can be estimated that remains constant through to the SIGNAL field and allows the required information to be decoded.

For a MIMO device, the channel transfer functions are not completely known for all subcarriers for each transmitting antenna. It is therefore necessary to exploit the characteristics of the physical channel, whereby nearby subcarriers have a channel transfer function that is correlated with one another. It is therefore possible to make an estimate of the unknown subcarriers interpolated or extrapolated from the nearby subcarriers.

Multiple training symbols give an unambiguous and good-quality estimate for the channel transfer functions. However, they represent a significant overhead (an extra 20µs per packet). Since the aim of the MIMO system is to give very greatly increased throughput, this overhead becomes the limiting factor in determining the available transmission rate and fails to meet the required target of 100Mbps.

The use of the diagonal channel estimate offers a minimal overhead. However, the requirement to interpolate / extrapolate the channel transfer functions causes problems, particularly for difficult channels, due to errors in the resulting estimates. Such channel estimation errors are irreducible (increasing signal power does not improve the situation), and are likely to be a limit to the available datarate. The problem is particularly bad for the subcarriers at the edge of the band, for which extrapolation must be performed (since a known subcarrier channel transfer function exists only on one side).

### Summary of the invention

The object with the present invention is to solve the above mentioned problems. This object is achieved with a transmitter in accordance with claim 1. The transmitter in a transmission system is operable to optimise estimates of a quantity at a receiver for improved operation. The transmission system comprises a transmitting means connected to a number of antennas, and a to said transmitting means connected control means. The control means controls the transmitting means to initially transmit an initial training/quantity estimation sequence during an initial training/quantity estimation phase and subsequently transmit a sequence of data symbols such that the information rate of the data symbols is progressively increased.

An advantage with this transmitter is that it provides an improved trade-off between initial quantity estimation error and the amount of overhead introduced, thereby allowing higher final rates for a given probability of packet error at a receiver which is able to update the quantity estimates based on the received data.

This object is also achieved with an optimisation system according to claim 3. The optimisation system is operable to optimise estimates of a quantity at a receiver for improved operation. The optimisation system comprises a receiving means connected to a number of receiving antennas, and a to said receiving means connected control means. The control means controls the receiving means to initially receive an initial training/quantity estimation sequence during an initial training/quantity estimation phase and subsequently receive a sequence of data symbols such that the information rate of the data symbols is progressively increased.

An advantage with this optimisation system is that it provides an improved trade-off between initial quantity estimation error and the amount of overhead introduced, thereby allowing higher final rates for a given probability of packet error at a receiver which is able to update the quantity estimates based on the received data.

This object is also achieved with a method at a transmitter to allow for the optimisation of estimates of a quantity at a receiver according to claim 14. The method comprises the steps:
- to transmit an initial training / quantity estimation sequence; and
- to transmit the first few data symbols of the remainder of the transmission at a low information rate and to increase the information rate progressively with time.

An advantage with this method is that it provides an improved trade-off between initial quantity estimation error and the amount of overhead introduced, thereby allowing higher final rates for a given probability of packet error at a receiver which is able to update the quantity estimates based on the received data.

This object is also achieved with at least one computer program product according to claim 15. The at least one computer program product performs the steps of claim 14 and consequently achieves the same advantage.

This object is also achieved with a method for optimisation of estimates of a quantity at a receiver according to claim 18. The method comprises the steps:
- to receive an initial training/quantity estimation sequence during an initial training/quantity estimation phase; and
to adapt the receiver to an increasing information rate used at the transmitter.

An advantage with this method is that it provides an improved trade-off between initial quantity estimation error and the amount of overhead introduced, thereby allowing higher final rates for a given probability of packet error.

This object is also achieved with at least one computer program product according to claim 30. The at least one computer program product performs the steps of claim 18 and consequently achieves the same advantage.

This object is also achieved with a transmitter in a transmission system according to claim 31. The transmitter is operable to optimise estimates of a channel transfer function at a receiver for improved operation for backward-compatible multiple input multiple output (MIMO) OFDM-based wireless LAN networks, comprising m number of transmitting antennas and n number of receiving antennas, wherein m an n are integers and m, n ≥ 2. The transmissions on each transmitting antenna during an initial training/channel estimation phase are separated in frequency, so that a given transmitting antenna is the only one transmitting on a given subcarrier at a given time. The transmission system comprises a transmitting means connected to a number of antenna means. The transmission system also comprises a control means connected to said transmitting means and is operable to control the transmissions in such a way that a different assignment of subcarriers to transmitting antennas is made for later portions of the training/estimation sequence than for the initial portion of the training/estimation sequence containing the 11a/11g SIGNAL field.

An advantage with this transmitter is that it provides improved channel estimates without any overhead.

This object is also achieved with an optimisation system according to claim 34. The optimisation system is operable to optimise estimates of a channel transfer function at a receiver for improved operation for backward-compatible multiple input multiple output (MIMO) OFDM-based wireless LAN networks, comprising m number of transmitting antennas and n number of receiving antennas, wherein m an n are integers and m, n ≥ 2. The transmissions on each transmitting antenna during an initial training/channel estimation phase are separated in frequency, so that a given transmitting antenna is the only one transmitting on a given subcarrier at a given time. The optimisation system comprises a receiving means connected to receiving antenna, and a to the receiving means connected control means operable to adapt an estimate updating process to a different subcarrier to transmitting antenna mapping during later portions of the training/estimation sequence than for the initial portion of the training/estimation sequence containing the 11a/11g. SIGNAL field.

An advantage with this optimisation system is that it provides improved channel estimates without any overhead.

This object is also achieved with a method at a transmitter according to claim 40. the method is for optimising estimates of channel transfer functions at a receiver for improved operation for backward-compatible multiple input multiple output (MIMO) OFDM-based wireless LAN networks, comprising m number of transmitting antennas and n number of receiving antennas, wherein m an n are integers and m, n ≥ 2. The method comprises the steps:
- to separate the transmissions on each transmitting antenna in frequency during an initial training/channel estimation phase, so that a given transmitting antenna is the only one transmitting on a given subcarrier at a time; and
- to apply a different assignment of subcarriers to transmitting antennas for the later portions of the training / channel estimation sequence than for the initial portion containing the 11a/11g SIGNAL field.

An advantage with this method is that it provides improved channel estimates without any overhead.

This object is also achieved with at least one computer program product according to claim 43. The at least one computer program product performs the steps of claim 40 and consequently achieves the same advantage.

This object is also achieved with a method according to claim 44. The method is for optimising estimates of channel transfer functions at a receiver for improved operation backward-compatible multiple input multiple output (MIMO) OFDM-based wireless LAN networks, comprising m number of transmitting antennas and n number of receiving antennas, wherein m an n are integers and m, n ≥ 2. The method comprises the steps:
- to receive an initial portion of the training / estimation sequence containing the 11a/11g SIGNAL field
- to obtain an initial estimate of the channel transfer function during the initial portion of the training / estimation sequence containing the 11a/11g SIGNAL field
- to receive a subsequent portion of the training / estimation sequence where the mapping of subcarriers to transmit antennae is changed; and
- to update the initial estimate of the channel transfer function

An advantage with this method is that it provides improved channel estimates without any overhead.

This object is also achieved with at least one computer program product according to claim 48. The at least one computer program product performs the steps of claim 44 and consequently achieves the same advantage.

This object is also achieved with a transmitter according to claim 49. The transmitter in a transmission system is operable to optimise estimates of channel transfer functions at a receiver for improved operation for backward-compatible multiple input multiple output (MIMO) OFDM-based wireless LAN networks, comprising m number of transmitting antennas and n number of receiving antennas, wherein m an n are integers and m, n ≥ 2. The transmitter comprises a transmission means capable of transmitting on a number of antennas and a to said transmission means connected control means, which is operable to control transmissions in such a way that the subcarriers used for a pilot tone transmission is changed form symbol to symbol.

An advantage with this transmitter is that it allows channel estimates to be improved without the risk of data decoding errors, and gives the additional benefit of making pilot transmission more robust to deep fading or interference on particular subcarrier frequencies.

This object is also achieved with a receiver according to claim 52. The receiver in a transmission system is operable to optimise estimates of channel transfer functions at said receiver for improved operation for backward-compatible multiple input multiple output (MIMO) OFDM-based wireless LAN networks, comprising m number of transmitting antennas and n number of receiving antennas, wherein m an n are integers and m, n ≥ 2. The receiver comprises a first estimating means operable to make an initial estimate of said channel transfer function, based on the received symbols during an initial training/channel estimation phase. The receiver also comprises a to said first estimating means connected estimate updating means operable to update said estimate of said channel transfer function, a to said estimate updating means connected remodulating means operable to duplicate the modulation function performed at the transmitter. The receiver also comprises a to said estimate updating means connected pilot measuring means and a control means connected to said pilot measuring means, said estimate updating means and said remodulating means, which control means is operable to control the pilot measuring means such that the subcarriers used for a pilot tone reception is changed from symbol to symbol.

An advantage with this receiver is that it allows channel estimates to be improved without the risk of data decoding errors, and gives the additional benefit of making pilot transmission more robust to deep fading or interference on particular subcarrier frequencies.

This object is also achieved with a method according to claim 54. The method at a transmitter is for allowing optimised estimates of channel transfer functions at a receiver for improved operation for backward-compatible multiple input multiple output (MIMO) OFDM-based wireless LAN networks, comprising m number of transmitting antennas and n number of receiving antennas, wherein m an n are integers and m, n ≥ 2. The method comprises the steps:
- to transmit an initial training / channel estimating sequence during an initial training / channel estimation phase; and
- to control transmissions in subsequent data symbols in such a way that the subcarriers used for a pilot tone transmission are changed from symbol to symbol.

An advantage with this method is that it allows channel estimates to be improved without the risk of data decoding errors, and gives the additional benefit of making pilot transmission more robust to deep fading or interference on particular subcarrier frequencies.

This object is also achieved with at least one computer program product according to claim 57. The at least one computer program product performs the steps of claim 54 and consequently achieves the same advantage.

This object is also achieved with a method according to claim 58. The method at a receiver is for producing optimized estimates of channel transfer functions for improved operation in a multiple input multiple output (MIMO) OFDM-based wireless LAN networks, comprising m number of transmitting antennas and n number of receiving antennas, wherein m an n are integers and m, n ≥ 2. The method comprises the steps:
- to make a initial estimate of said channel transfer function, based on the received symbols during said initial training/channel estimating phase;
- to receive the transmitted pilot tones from the subcarriers used at the transmitter;
- to duplicate the modulation function performed at the transmitter; and
- to update said estimate of said channel transfer function using the received pilot tones.

An advantage with this method is that it allows channel estimates to be improved without the risk of data decoding errors, and gives the additional benefit of making pilot transmission more robust to deep fading or interference on particular subcarrier frequencies.

This object is also achieved with at least one computer program product according to claim 59. The at least one computer program product performs the steps of claim 58 and consequently achieves the same advantage.

The present invention will in the following by way of embodiments be described in more detail, in conjunction with the enclosed drawings, in which:

### Brief description of the drawings

Fig. 1 is a diagram showing a MIMO system showing channel transfer functions between antennas;
Fig. 2 shows an IEEE 802.11a/g OFDM preamble structure;
Fig. 3 discloses an OFDM subcarrier (frequency domain) structure;
Fig. 4 shows an OFDM preamble structure with second SIGNAL field (SIGNAL2);
Fig. 5 discloses a 11a/g compatible OFDM-MIMO preamble with replicated training sequences;
Fig. 6 shows distribution of subcarriers over transmit antennas for diagonal channel estimation;
Fig. 7 is a block diagram of a first embodiment of a transmitter according to the present invention;
Fig. 8 is a block diagram of a first embodiment of an optimisation system according to the present invention;
Fig. 9 is a block diagram of optimisation system disclosed in Fig. 8 in more detail;
Fig. 10 is a flow chart of a first embodiment of a method at a transmitter according to the present invention;
Fig. 11 is a flow chart of a first embodiment of a method for optimisation according to the present invention;
Fig. 12 is a flow chart of the method disclosed in Fig. 11 in more detail;
Fig. 13 is a block diagram of a second embodiment of a transmitter according to the present invention;
Fig. 14 is a block diagram of a second embodiment of an optimisation system according to the present invention;
Fig. 15 is a block diagram of the optimisation system disclosed in Fig. 14 in more detail;
Fig. 16 is a flow chart of a second embodiment of a method at a transmitter according to the present invention,
Fig. 17 is a flow chart of a second embodiment of a method for optimising according to the present invention;
Fig. 18 is a block diagram of a third embodiment of a transmitter according to the present invention;
Fig. 19 is a block diagram of a receiver according to the present invention;
Fig. 20 is a flow chart of a third embodiment of a method at a transmitter according to the present invention;
Fig. 21 is a flow chart of a method at a receiver according to the present invention;
Fig. 22 is a flow chart of the method disclosed in Fig. 21 in more detail;
Fig. 23 shows the change of subcarrier/Tx antenna allocation for SIGNAL2 field; and
Fig. 24 show some examples of computer program products according to the present invention.

### Detailed description of embodiments

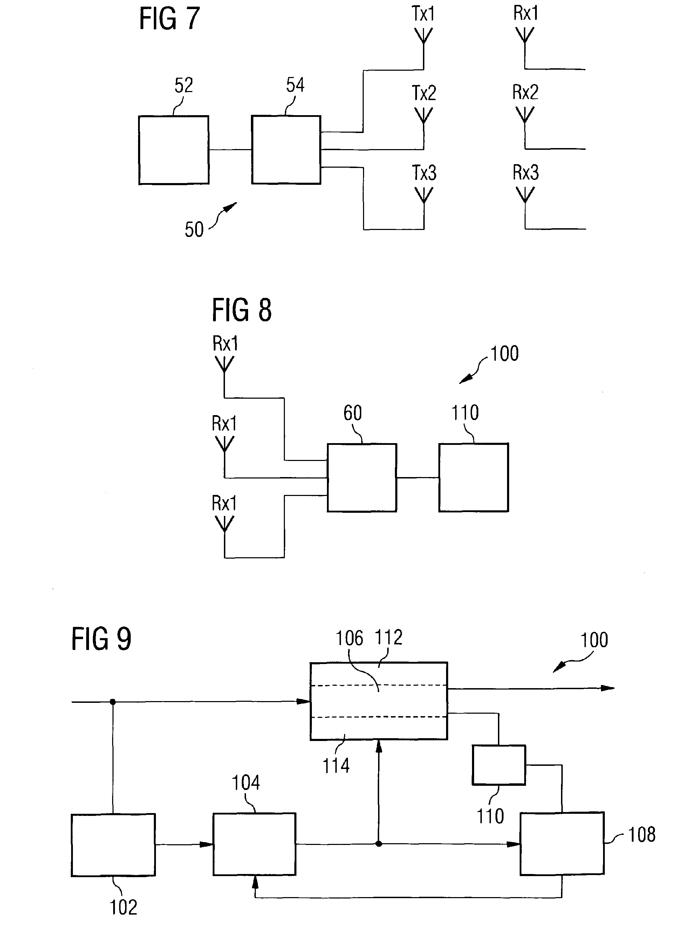

In Fig. 7 there is disclosed a block diagram of a first embodiment of a transmitter 54 according to the present invention. The transmitter 54 is included in a transmission system 50. The transmission system 50 comprises a transmitting means 54 connected to three transmitting antennas Tx1, Tx2, Tx3, and a to said transmitting means 54 connected control means 52. The control means 52 controls said transmitting means 54 to initially transmit an initial training/quantity estimation sequence during an initial training/quantity estimation phase and subsequently transmit a sequence of data symbols such that the information rate of the data symbols is progressively increased. In Fig. 7 there is also disclosed three receiving antennas Rx1, Rx2, Rx3.

According to a preferred embodiment said transmitter is implemented in a multiple input multiple output (MIMO) transmission system, wherein the transmissions on each transmitting antenna during an initial training/quantity estimation phase are separated in frequency, so that a given transmitting antenna is the only one transmitting on a given subcarrier at a given time.

In Fig. 8 there is disclosed a block diagram of a first embodiment of an optimisation system 100 according to the present invention. The optimisation system 100 is operable to optimise estimates of a quantity at a receiver for improved operation. The optimisation system 100 comprises a receiving means 60 connected to a number of receiving antennas Rx1, Rx2, Rx3, and a to said receiving means 60 connected control means 110. The control means 110 controls the receiving means 60 to initially receive an initial training (quantity estimation sequence during an initial training/quantity estimation phase and subsequently receive a sequence of data symbols such that the information rate of the data symbols is progressively increased.

In Fig. 9 there is disclosed a block diagram of the optimisation system 100 disclosed in Fig. 8 in more detail. The optimisation system 100 comprises a first estimating means 102 operable to make an initial estimate of said quantity, based on the received symbols during an initial training/quantity estimate phase. The system 100 also comprises an to the first estimating means 102 connected estimate updating means 104 operable to store a current estimate of said quantity. The system 100 also comprises a to said estimate updating means 104 connected decoding means 106 operable to decode the received symbols. The system 100 also comprises a remodulating means 108 connected to said decoding means 106 and said estimate updating means 104, wherein said remodulating means 108 is operable to duplicate the modulation function performed at the transmitter to generate estimated of the transmitted symbols. The system 100 also comprises a control means 110 connected to the decoding means 106 and the remodulating means 108. In fig. 9 there is also disclosed a demodulating means 112 and an error correction means 114.

In a preferred embodiment the control means 110 is operable to compare the received symbols and the estimated transmitted symbols and to calculate an error vector, wherein said estimate updating means 104 updates said estimate of the quantity based on said error vector.

In a preferred embodiment the updating means 104 updates said estimate of said quantity by using an RLS algorithm.

According to another embodiment the updating means 104 updates said estimate of said quantity by using an LMS algorithm.

The quantity can be one of a channel transfer function from a transmitting antenna to a receiving antenna, a frequency offset, a timing offset, sampling rate offset or a measure of the spatial position of the transmitter.

In a preferred embodiment the optimisation system is implemented in a multiple input multiple output (MIMO) transmission system comprising m number of transmitting antennae and n number of receiving antennae, wherein m and n are integers and m, n ≥ 2, wherein the transmissions on each transmitting antenna during an initial training/quantity estimation phase are separated in frequency, so that a given transmitting antenna is the only one transmitting on a given subcarrier at a given time.

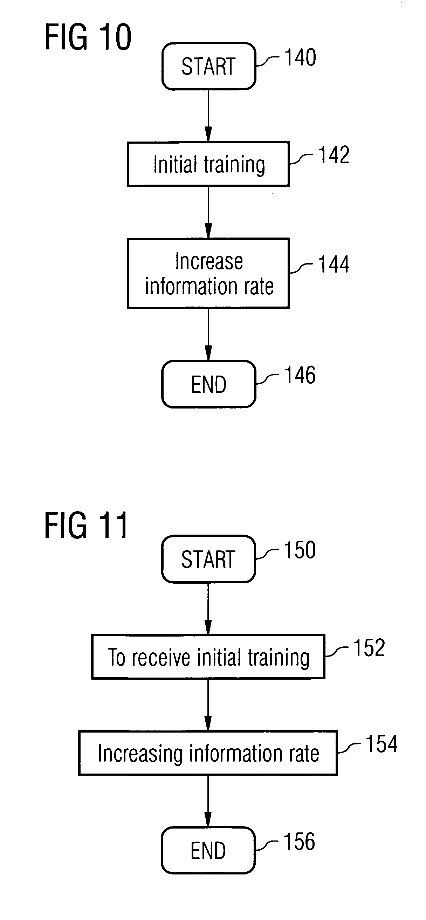

In Fig. 10 there is disclosed a flow chart of a first embodiment of a method at a transmitter according to the present invention. The method allows for optimisation of estimates of a quantity at a receiver. The method begins at block 140. The method continues, at block 142, with the step: to transmit an initial training/quantity estimation sequence. Thereafter the method continues, at block 144, with the step: to transmit the first few data symbols of the remainder of the transmission at a low information rate and to increase the information rate progressively with time. The method is completed at block 146.

In a preferred embodiment said method also comprises the step:
- to decide upon in advance and signal the manner in which the information rate is to be changed, by using an agreed encoding during said initial training / quantity estimation sequence.

In a preferred embodiment the transmission system is a backward-compatible multiple input multiple output (MIMO) transmission system comprising m number of transmitting antennas and n number of receiving antennas, wherein m and n are integers and m, n ≥ 2, that the transmissions on each transmitting antenna are separated in frequency during the initial training/quantity estimation phase, so that a given transmitting antenna is the only one transmitting on a given subcarrier at a given time.

In Fig. 11 there is disclosed a flow chart of a first embodiment of a method for optimisation according to the present invention. The method is for optimising estimates of a quantity at a receiver. The method begins at block 150. The method continues, at block 152, with the step: to receive an initial training/quantity estimation sequence during an initial training/quantity estimation phase. Thereafter, the method continues, at block 154, with the step: to adapt the receiver to an increasing information rate used at the transmitter. The method is completed at block 156.

In a preferred embodiment the method also comprises the steps:
- to make an initial estimate of said quantity, based on the received symbols during said initial training/quantity estimating phase;
- to store a current estimate of said quantity;
- to decode the current estimate of said quantity;
- to receive a data symbol and decode a data symbol;
- to duplicate the modulation function performed at the transmitter; and
- to update the estimate of said quantity

In a preferred embodiment said method also comprises the steps:
- to compare the received symbols and the transmitted symbols;
- to calculate an error vector; and
- to update said estimate of said quantity based on said error vector.

In a preferred embodiment said method also comprises the step:
- to update said estimates of said quantity by using an RLS algorithm.

In a preferred embodiment said method also comprises the step:
- to update said estimates of said quantity by using an LMS algorithm.

In a preferred embodiment said method also comprises the step:
- to use an agreed encoding received during said initial training / quantity estimation sequence to determine the manner in which the receiver is to be adapted to a changing information rate.

In a preferred embodiment said quantity is a channel transfer function from a transmitting antenna to a receiving antenna.

In a preferred embodiment said quantity is a frequency offset.

In a preferred embodiment said quantity is a timing offset.

In a preferred embodiment said quantity is a sampling rate offset.

In a preferred embodiment said quantity is the spatial position of a transmitter.

In a preferred embodiment the transmission system is a backward-compatible multiple input multiple output (MIMO) transmission systems comprising m number of transmitting antennas and n number of receiving antennas, wherein m and n are integers and m, n ≥ 2, that the transmissions on each transmitting antenna are separated in frequency during the initial training/quantity estimation phase, so that a given transmitting antenna is the only one transmitting on a given subcarrier at a given time.

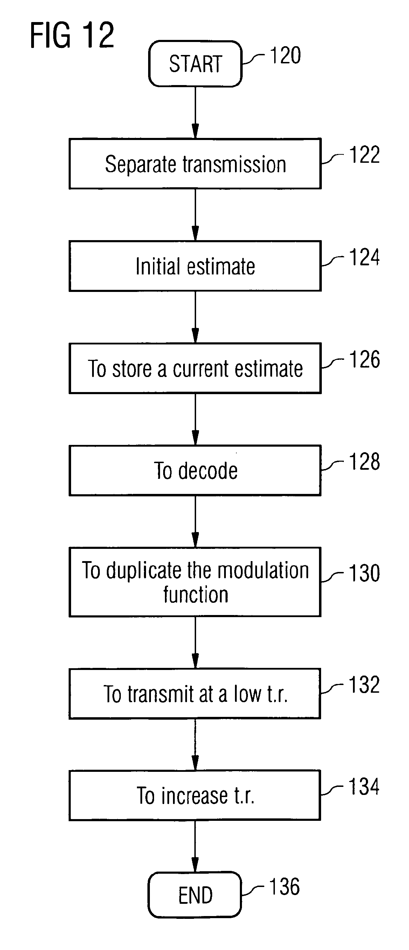

In Fig. 12 there is disclosed a flow chart of the method disclosed in Fig. 11 in more detail. The method begins at block 120. The method continues, at block 122, with the step: to separate the transmissions on each transmitting antenna in frequency during an initial training/quantity estimation phase, so that a given transmitting antenna is the only one transmitting on a given subcarrier at a given time. Thereafter, the method continues, at block 124, with the step: to make an initial estimate of said quantity, based on the received symbols during said initial training/quantity estimating phase. The method continues, at block 126, with the step: to store a current estimate of said quantity. Thereafter the method continues, at block 128, with the step: to decode the current estimate of said quantity. The method continues, at block 130, with the step: to duplicate the modulation function performed at the transmitter. Thereafter the method continues, at block 132, with the step: to transmit the first few data symbols a transmissions at a low transmission rate. The method continues, at block 134, with the step: to increase the transmission rate progressively with time. The method is completed at block 136.

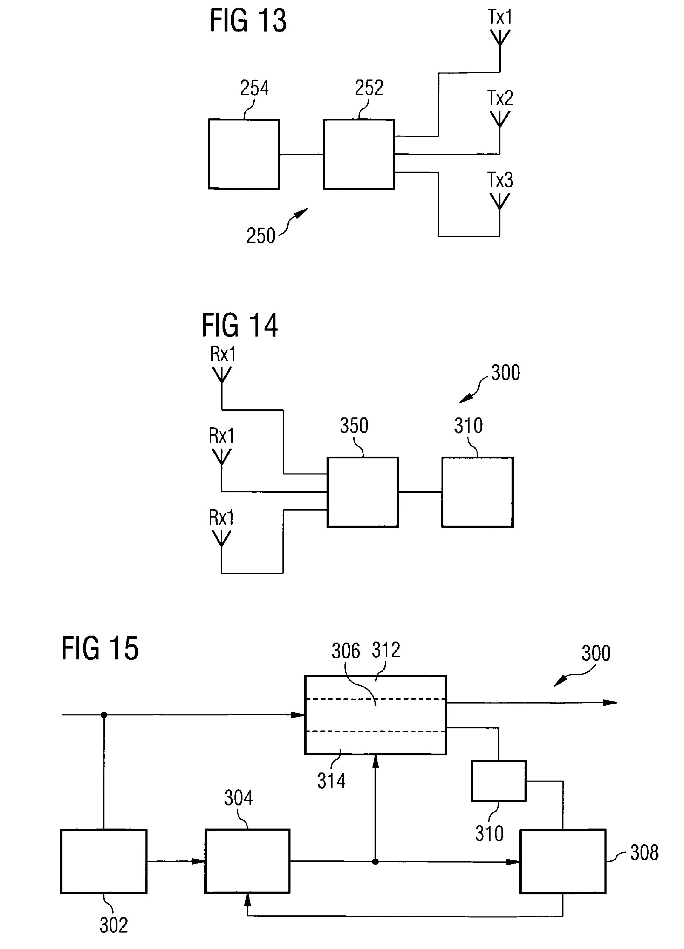

In Fig. 13 there is a disclosed a block diagram of a second embodiment of a transmitter 252 according the present invention. The transmitter 252 in a transmission system 250 is operable to optimise estimates of a channel transfer function at a receiver for improved operation for backward-compatible multiple input multiple output (MIMO) OFDM-based wireless LAN networks comprising m numbers of transmitting antennas Tx1-Txm and n number of receiving antennas, wherein m an n are integers and m, n ≥ 2. The transmission system 250 comprises a transmitting means 252 connected to a number of antenna means Txl-Txm. The transmission system 250 connected to said transmitting means 252 operable to control the transmissions in such a way that a different assignment of subcarriers to transmitting antenna is made for later portions of the training/estimation sequence than for the initial portion of the training/estimation sequence containing the 11a/11g SIGNAL field.

In a preferred embodiment said control means 254 controls the transmissions in such a way that the mapping of subcarriers to transmit antennas follows a predetermined sequence known at the receiver.

In a preferred embodiment said control means 254 controls the transmissions in such a way that the mapping of subcarriers to transmit antennas optimizes the possibility for the receiver to estimate the channel transfer functions.

In Fig. 14 there is disclosed a block diagram of a second embodiment of an optimisation system 300 according to the present invention.

The optimisation system 300 is operable to optimise estimates of a channel transfer function at a receiver for improved operation for backward-compatible multiple input multiple output (MIMO) OFDM-based wireless LAN networks comprising m number of transmitting antennas and n number of receiving antennas, wherein m and n are integers and m, n ≥ 2, wherein the transmissions on each transmitting antenna during an initial training/channel estimating phase are separated in frequency, so that a given transmitting antenna is the only one transmitting on a given subcarrier at a given time.

The optimisation system 300 comprises a receiving means 350 connected to said receiving antennas Rx1, Rx2, Rx3, and a to said receiving means 350 connected control means 310. The control means 310 is operable to adapt an estimate updating process to a different subcarrier to transmit antenna mapping during later portions of the training/estimation sequence than for the initial portion of the training/estimation sequence containing the 11a/11g SIGNAL field.

In a preferred embodiment the optimisation system 300, see Fig. 15, comprises a first estimating means 302 operable to make an initial estimate of said channel transfer function, based on the received symbols during said initial portion of the training/channel estimation phase, an to said first estimating means 302 connected estimate updating means 304 operable to update said estimate of said channel transfer function during said training/channel estimation phase, a to said estimate updating means 304 connected decoding means 306 operable to decode the received symbols, wherein said optimisation system 300 also comprises a remodulating means 308 connected to said decoding means 306 and said estimate updating means 304, which remodulating means 308 is operable to duplicate the modulation function performed at the transmitter, wherein said control means 310 also is connected to said decoding means 306 and said remodulating means 308.

In a preferred embodiment said control means 310 controls the estimate updating process in such a way that the mapping of subcarriers to transmit antennas follows a predetermined sequence used at the transmitter.

In a preferred embodiment said control means 310 controls the estimate updating process in such a way as to optmize the estimate of the channel transfer functions.

In a preferred embodiment said optimisation system 300 also comprises a demodulating means 312 connected to said estimate updating means 304 and to said decoding means 306, which demodulating means 312 is operable to demodulate the received symbols.

In a preferred embodiment said optimisation system 300 also comprises a correction means 314 connected to said decoding means 305, wherein said correction means 314 is operable to perform an error correction on said decoded symbols.

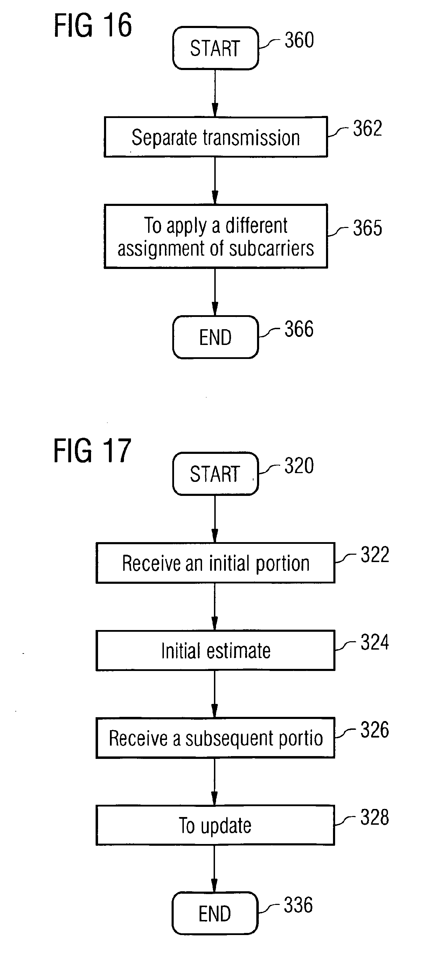

In Fig. 16 there is disclosed a flow chart of a second embodiment of a method at a transmitter according to the present invention. The method at a transmitter is for optimising estimates of channel transfer functions at a receiver for improved operation for backward-compatible multiple input multiple output (MIMO) OFDM-based wireless LAN networks, comprising m number of transmitting antennas and n number of receiving antennas, wherein m an n are integers and m, n ≥ 2. The method begins at block 360. The method continues, at block 362, with the step to separate the transmissions on each transmitting antenna in frequency during an initial training/channel estimation phase, so that only a single given antenna is transmitting on a given subcarrier at a given time. Thereafter, the method continues, at block 364, with the step: to apply a different assignment of subcarriers to transmitting antennas for the later portions of the training/channel estimation sequence than for the initial portion containing the 11a/11g SIGNAL field.

In a preferred embodiment said method comprises the step:
- to control the transmissions in such a way that the mapping of subcarriers to transmit antennas follows a predetermined sequence known at the receiver.

In a preferred embodiment said method also comprises the step:
- to control the transmissions in such a way that the mapping of subcarriers to transmit antennas optimizes the possibility for the receiver to estimate the channel transfer functions.

In Fig. 17 there is disclosed a flow chart of a second embodiment of a method for optimising according the present invention. A method for optimising estimates of channel transfer functions at a receiver for improved operation for backward-compatible multiple input multiple output (MIMO) OFDM-based wireless LAN networks, comprising m number of transmitting antennas and n number of receiving antennas, wherein m and n are integers and m, n ≥ 2. The method begins at block 320. The method continues, at block 322, with the step: to receive an initial portion of the training/estimation sequence containing the 11a/11g SIGNAL field. Thereafter, the method continues, at block 324, with the step: to obtain an initial estimate of the channel transfer function during the initial portion of the training/estimation sequence containing the 11a/11g SIGNAL field. The method continues, at block 326, with the step: to receive a subsequent portion of the training/estimation sequence where the mapping of subcarriers to transmit antennas is changed. Thereafter, the method continues, at block 328, with the step: to update the initial estimate of the channel transfer function. The method is completed at block 330.

In a preferred embodiment said method comprises the step:
- to control the updating of the channel transfer function estimates based on a predetermined sequence of mappings of subcarriers to transmit antennae known to be used at the transmitter.

In a preferred embodiment said method comprises the step:
- to demodulate the received symbols.

In a preferred embodiment said method comprises the step:
- to perform an error correction on said decoded symbols.

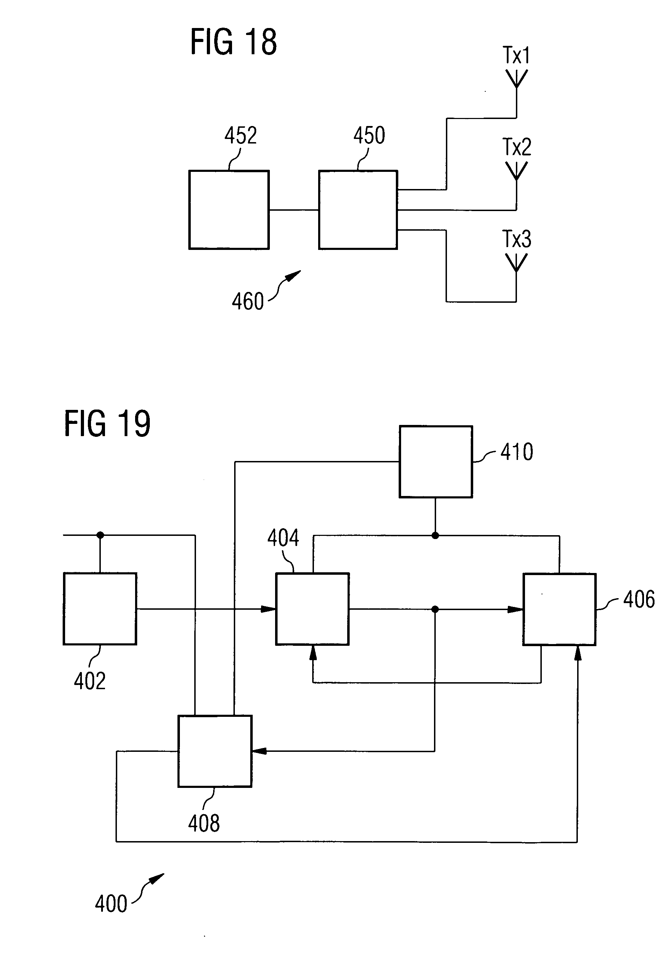

In Fig. 18 there is disclosed a block diagram of a third embodiment of a transmitter 450 according to the present invention. The transmitter 450 in a transmission system 460 is operable to optimise estimates of channel transfers functions at a receiver for improved operation for backward-compatible multiple input multiple output (MIMO) OFDM-based wireless LAN networks, comprising m numbers of transmitting antennas and n numbers of receiving antennas, wherein m and n are integers and m, n ≥ 2. The transmission system 460 comprises a transmission means 450 capable of transmitting on a number of antennas Tx1-Txm, and a to said transmission means 450 connected control means 452, operable to control transmissions in such a way that the subcarriers used for a pilot tone transmission is changed from symbol to symbol.

In a preferred embodiment said control means 452 also is operable to decide in advance the pattern of which subcarriers and/or transmitting antennas are used for pilot tones in each symbol.

In a preferred embodiment said control means 452 also is operable to transmit known pilot tones on combinations of transmitting antenna Tx1-Txm and subcarrier that have not been used during the initial training/channel estimating phase.

In Fig. 19 there is disclosed a block diagram of a receiver 400 according to the present invention. The receiver 400 in a transmission system 460 is operable to optimise estimates of channel transfer functions at said receiver for improved operation for backward-compatible multiple input multiple output (MIMO) OFDM-based wireless LAN networks, comprising m number of transmitting antennas and n number of receiving antennas, wherein m and n are integers and m, n ≥ 2, wherein said receiver 400 comprises a first estimating means 402 operable to make an initial estimate of said channel transfer function, based on the received symbols during an initial training/channel estimation phase, an to said first estimating means 402 connected estimate updating means 404 operable to update said estimate of said channel transfer function, a to said estimate updating means 404 connected remodulating means 406 operable to duplicate the modulation function performed at the transmitter, wherein that said receiver 400 also comprises a to said estimate updating means 404 connected pilot measuring means 408 and a control means 410 connected to said pilot measuring means 408 said estimate updating means 404 and said remodulating means 406, which control means 410 is operable to control the pilot measuring means such that the subcarriers used for a pilot tone reception is changed from symbol to symbol.

In a preferred embodiment said control means 410 also is operable to decide in advance the pattern of which subcarriers and/or transmitting antennas are used for pilot tones in each symbol.

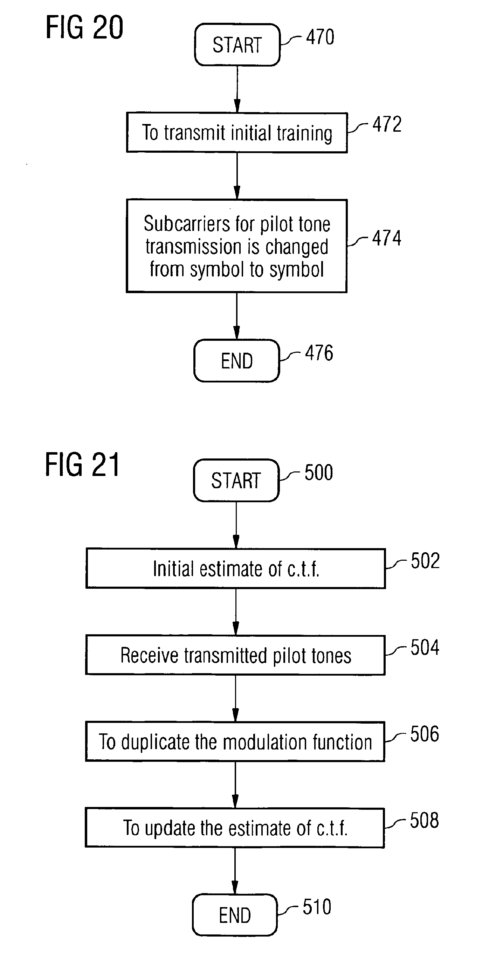

In Fig. 20 there is disclosed a flow chart of a third embodiment of a method at a transmitter according to the present invention. The method at a transmitter for allowing optimized estimates of channel transfer functions at a receiver for improved operation for backward-compatible multiple input multiple output (MIMO) OFDM-based wireless LAN networks, comprising m number of transmitting antennas and n number of receiving antennas, wherein m and n are integers and m, n ≥ 2. The method begins at block 470. The method continues, at block 472, with the step: to transmit an initial training/channel estimating sequence during an initial training/channel estimation phase. Thereafter the method continues, at block 474, with the step: to control transmissions in subsequent data symbols in such a way that the subcarriers used for a pilot tone transmission is changed from symbol to symbol. The method is completed at block 476.

In a preferred embodiment said method also comprises the step:
- to decide in advance the pattern of which subcarriers and/or transmitting antennas are used for pilot tones in each symbol.

In a preferred embodiment said method also comprises the step:
- to transmit known pilot tones on combinations of transmitting antenna and subcarrier that not have been used during the initial training/channel estimating phase.

In Fig. 21 there is disclosed a flow chart of a method at a receiver according to the present invention. The method at a receiver for producing optimized estimates of channel transfer functions for improved operation in a multiple input multiple output (MIMO) OFDM-based wireless LAN network, comprising m number of transmitting antennas and n number of receiving antennas, wherein m and n are integers and m, n ≥ 2. The method begins at block 500. The method continues, at block 502, with the step: to make an initial estimate of said channel transfer function, based on the received symbols during said initial training/channel estimating phase. Thereafter, the method continues, at block 504, with the step: to receive the transmitted pilot tones from the subcarriers used at the transmitter. The method continues, at block 506, with the step: to duplicate the modulation function performed at the transmitter. Thereafter, the method continues, at block 508, with the step: to update said estimate of said channel transfer function using the received pilot tones. The method is completed at block 510.

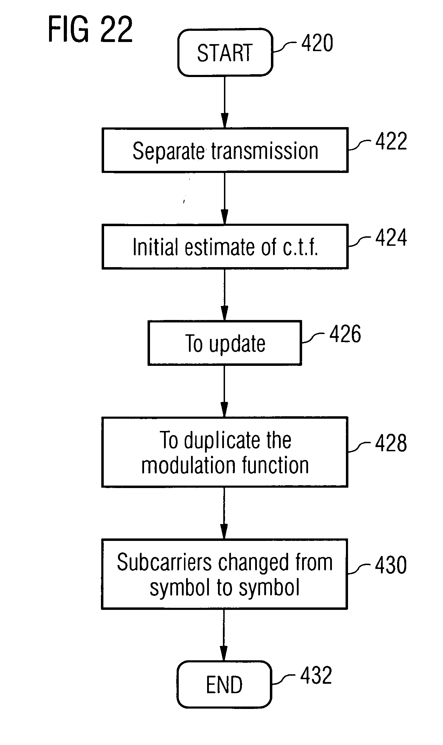

In Fig. 22 there is disclosed a flow chart of the method disclosed in Fig. 21 in more detail. The method begins at block 420. The method continues with the following steps; at blocks 422 - 430:
- to separate the transmissions on each transmitting antenna in frequency during an initial training/channel estimating phase, so that a given transmitting antenna is the only one transmitting on a given subcarrier at a time;
- to make a initial estimate of said channel transfer function, based on the received symbols during said initial training/channel estimating phase;
- to update said estimate of said channel transfer func
- to duplicate the modulation function performed at the transmitter; and
- to control transmissions in such a way that the subcarriers used for a pilot tone transmission is changed from symbol to symbol.

The method is completed at block 432.

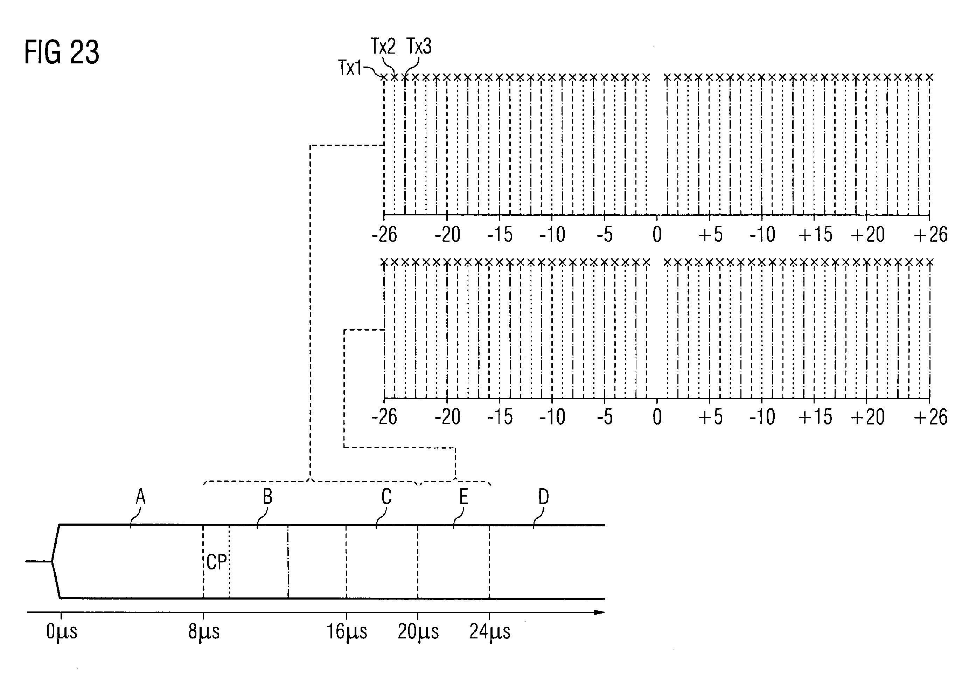

In fig. 23 there is disclosed the change of subcarrier/Tx antenna allocation for the SIGNAL2 field.

Typically, the SIGNAL2 field will be transmitted using one of the more robust modulation formats (probably the most robust mode). Since a significant amount of data is already encoded in the 11a/11g SIGNAL field, it is unlikely that a large amount of information would be encoded in the SIGNAL2 field, thereby allowing such a robust, low datarate format.Since the data is transmitted using the most robust encoding, data-based estimates of the channel transfer function are most likely to be reliable. Thus, the SIGNAL2 field can be treated in some respects as an extension of the preamble before more complex modulation formats are applied to the remainder of the data section. According to the invention, a different assignment of subcarriers to transmit antennae is made for the SIGNAL2 field, as shown in Fig. 23. This allows another set of channel transfer functions to be directly estimated without the need for interpolation or extrapolation.

It may be the case that the number of bits required to be transmitted in the SIGNAL2 field do not require the use of all of the available subcarriers. In this case, it is advantageous to transmit a known value on the remaining subcarriers. This allows a non data-dependent estimate of the channel transfer function on those subcarriers. It is particularly advantageous if the subcarriers at the band edge (e.g. subcarrier numbers -26, +26) are assigned with known values, since these are the values which will have the greatest error in the channel transfer function estimates and for which data-directed estimation is most likely to fail.

This pertains the parts of the invention disclosed in Fig. 13 - 17.

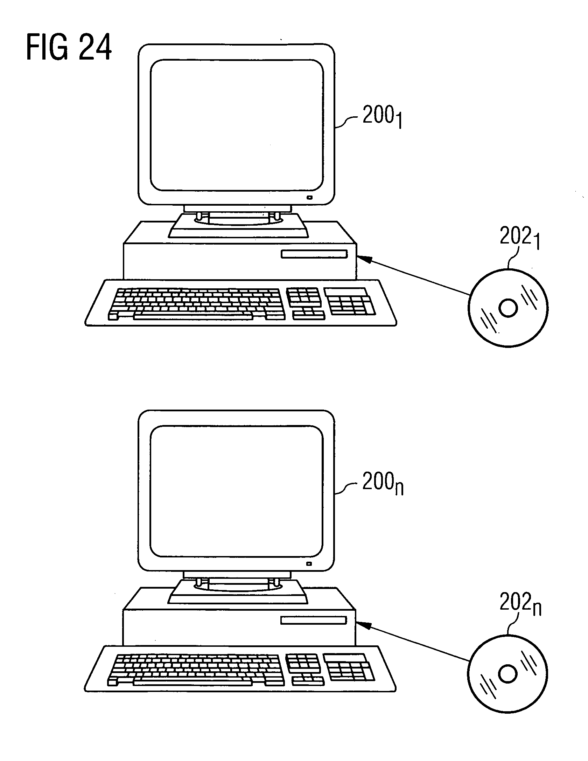

In Fig. 24 there is disclosed a schematic diagram of some computer program products according to the present invention. There is disclosed n different digital computers 200₁, ..., 200ₙ, wherein n is an integer. There is also disclosed n different computer program products 202₁, ..., 202ₙ, here showed in the form of compact discs. The different computer program products 202₁, ..., 202ₙ are directly loadable into the internal memory of the n different digital computers 200₁, ..., 200ₙ. Each computer program product 202₁, ..., 202ₙ comprises software code portions for performing some or all the steps of all the steps of Fig. 10, 11, 12, 16, 17, 20, 21 or 22 when the product (s) 202₁ ..., 202ₙ is/are run on said computer (s) 200₁ ..., 200ₙ. Said computer program products 202₁, ..., 202ₙ can e. g. be in the form of floppy disks, RAM disks, magnetic tapes, opto magnetical disks or any other suitable products.

The invention is not limited to the embodiments described in the foregoing. It will be obvious that many different modifications are possible within the scope of the following claims.

## Claims

1. A transmitter (54) in a transmission system (50) operable to optimise estimates of a quantity at a receiver for improved operation wherein said transmission system (50) comprises a transmitting means (54) connected to a number of antennas (Txm), and a to said transmitting means (54) connected control means (52); **characterized in that** said control means (52) controls said transmitting means (54) to initially transmit an initial training / quantity estimation sequence during an initial training / quantity estimation phase and subsequently transmit a sequence of data symbols such that the information rate of the data symbols is progressively increased.

2. A transmitter (54) according to claim 1, **characterized in that** it is implemented in a multiple input multiple output (MIMO) transmission system (50) comprising m number of transmitting antennae (Txm) and n number of receiving antennae (Rxn), wherein m and n are integers and m, n ≥ 2, wherein the transmissions on each transmitting antenna during an initial training/quantity estimation phase are separated in frequency, so that a given transmitting antenna is the only one transmitting on a given subcarrier at a given time.

3. An optimisation system (100) operable to estimates of a quantity at a receiver for improved operation, wherein said optimisation system (100) comprises a receiving means (60) connected to a number of receiving antennas (Rxn), and a to said receiving means (60) connected control means (110), **characterized in that** said control means (110) controls said receiving means (60) to initially receive an initial training/quantity estimation sequence during an initial training/quantity estimation phase and subsequently receive a sequence of data symbols such that the information rate of the data symbols is progressively increased.

4. An optimisation system (100) according to claim 3, **characterized in that** said optimisation system (100) also comprises a first estimating means (102) operable to make an initial estimate of said quantity, based on the received symbols during an initial training/quantity estimate phase, an to said first estimating means (102) connected estimate updating means (104) operable to store a current estimate of said quantity, a to said estimate updating means (104) connected decoding means (106) operable to decode the received symbols, wherein said optimisation system (100) also comprises a remodulating means (108) connected to said decoding means (106) and said estimate updating means (104), which remodulating means (108) is operable to duplicate the modulation function performed at the transmitter to generate estimated transmitted symbols, wherein that said optimisation system (100) also comprises a control means (110) connected to said decoding means (106) and said remodulating means (108).

5. An optimisation system (100) according to claim 4, **characterized in that** said control means (110) also is operable to compare the received symbols and the estimated transmitted symbols and to calculate an error vector, wherein said estimate updating mean (104) updates said estimate of said quantity based on said error vector.

6. An optimisation system (100) according to claim 4 or 5, **characterized in that** said updating means (104) updates said estimate of said quantity by using an RLS algorithm.

7. An optimisation system (100) according to claim 4 or 5, **characterized in that** said updating means (104) updates said estimate of said quantity by using an LMS algorithm.

8. An optimisation system (100) according to any one of claims 1 - 7, **characterized in that** said quantity is a channel transfer function from a transmitting antenna to a receiving antenna.

9. An optimisation system (100) according to any one of claims 1 - 7, **characterized in that** said quantity is a frequency offset.

10. An optimisation system (100) according to any one of claims 1 - 7, **characterized in that** said quantity is a timing offset.

11. An optimisation system (100) according to any one of claims 1 - 7, **characterized in that** said quantity is sampling rate offset.

12. An optimisation system (100) according to any one of claims 1 - 7, **characterized in that** said quantity is a measure of the spatial position of the transmitter.

13. An optimisation system (100) according to any of claims 1 - 12, **characterized in that** it is implemented in a multiple input multiple output (MIMO) transmission system comprising m number of transmitting antennae and n number of receiving antennae, wherein m and n are integers and m, n ≥ 2, wherein the transmissions on each transmitting antenna during an initial training/quantity estimation phase are separated in frequency, so that a given transmitting antenna is the only one transmitting on a given subcarrier at a given time.

14. A method at a transmitter to allow for the optimisation of estimates of a quantity at a receiver, wherein the method comprises the steps:
- to transmit an initial training / quantity estimation sequence; and
- to transmit the first few data symbols of the remainder of the transmission at a low information rate and to increase the information rate progressively with time.

15. A method at a transmitter to allow for the optimisation of estimates of a quantity at a receiver according to claim 14, **characterized in that** said method also comprises the step:
- to decide upon in advance and signal the manner in which the information rate is to be changed, by using an agreed encoding during said initial training / quantity estimation sequence.

16. A method at a transmitter to allow for the optimisation of estimates of a quantity at a receiver according to claim 14 or 15, **characterized in that** the transmission system is a backward-compatible multiple input multiple output (MIMO) transmission system comprising m number of transmitting antennas and n number of receiving antennas, wherein m and n are integers and m, n ≥ 2, that the transmissions on each transmitting antenna are separated in frequency during the initial training/quantity estimation phase, so that a given transmitting antenna is the only one transmitting on a given subcarrier at a given time.

17. At least one computer program product (202₁, ..., 202ₙ) directly loadable into the internal memory of at least one digital computer (200₁, ..., 200ₙ), comprising software code portions for performing the steps of Claim 14 when said at least one product (202₁, ..., 202ₙ) is/are run on said at least one computer (200₁, ..., 200ₙ).

18. A method for optimisation of estimates of a quantity at a receiver, wherein the method comprises the steps:
- to receive an initial training/quantity estimation sequence during an initial training/quantity estimation phase; and
- to adapt the receiver to an increasing information rate used at the transmitter.

19. A method for optimisation of estimates of a quantity at a receiver according to claim 18, **characterized in that** the method also comprises the steps:
- to make an initial estimate of said quantity, based on the received symbols during said initial training/quantity estimating phase;
- to store a current estimate of said quantity;
- to decode the current estimate of said quantity;
- to receive a data symbol and decode a data symbol;
- to duplicate the modulation function performed at the transmitter; and
- to update the estimate of said quantity

20. A method for optimisation of estimates of a quantity at a receiver according to claim 19, **characterized in that** said method also comprises the steps:
- to compare the received symbols and the transmitted symbols;
- to calculate an error vector; and
- to update said estimate of said quantity based on said error vector.

21. A method for optimisation estimates of a quantity at a receiver according to claim 19 or 20, **characterized in that** said method also comprises the step:
- to update said estimates of said quantity by using an RLS algorithm.

22. A method for optimisation estimates of a quantity at a receiver according to claim 19 or 20, **characterized in that** said method also comprises the step:
- to update said estimates of said quantity by using an LMS algorithm.

23. A method for optimisation estimates of a quantity at a receiver according to any one of claims 18 - 22, **characterized in that** said method also comprises the step:
- to use an agreed encoding received during said initial training / quantity estimation sequence to determine the manner in which the receiver is to be adapted to a changing information rate.

24. A method for optimisation estimates of a quantity at a receiver according to any one of claims 18 - 23, **char** **acterized in that** said quantity is a channel transfer function from a transmitting antenna to a receiving antenna.

25. A method for optimisation estimates of a quantity at a receiver according to any one of claims 18 - 23, **characterized in that** said quantity is a frequency offset.

26. A method for optimisation estimates of a quantity at a receiver according to any one of claims 18 - 23, **characterized in that** said quantity is a timing offset.

27. A method for optimisation estimates of a quantity at a receiver according to any one of claims 18 - 23, **characterized in that** said quantity is a sampling rate offset.

28. A method for optimisation estimates of a quantity at a receiver according to any one of claims 18 - 23, **characterized in that** said quantity is the spatial position of a transmitter.

29. A method for optimisation estimates of a quantity at a receiver according to any of claims 18 - 28 **characterized in that** the transmission system is a backward-compatible multiple input multiple output (MIMO) transmission systems comprising m number of transmitting antennas and n number of receiving antennas, wherein m and n are integers and m, n ≥ 2, that the transmissions on each transmitting antenna are separated in frequency during the initial training/quantity estimation phase, so that a given transmitting antenna is the only one transmitting on a given subcarrier at a given time.

30. At least one computer program product (202₁, ..., 202ₙ) directly loadable into the internal memory of at least one digital computer (200₁, ..., 200ₙ), comprising software code portions for performing the steps of Claim 18 when said at least one product (202₁, ..., 202ₙ) is/are run on said at least one computer (200₁, ..., 200ₙ).

31. A transmitter (252) in a transmission system (250) operable to optimise estimates of a channel transfer functions at a receiver for improved operation for backward-compatible multiple input multiple output (MIMO) OFDM-based wireless LAN networks comprising m number of transmitting antennas (Txm) and n number of receiving antennas, wherein m and n are integers and m, n ≥ 2, wherein the transmissions on each transmitting antenna (Txm) during an initial training/channel estimating phase are separated in frequency, so that a given transmitting antenna (Txm) is the only one transmitting on a given subcarrier at a given time, comprising a transmitting means (252) connected to a number of antenna means (Txm) **characterized in that** said transmission system (250) also comprises a control means (254) connected to said transmitting means (252) operable to control the transmissions in such a way that a different assignment of subcarriers to transmitting antennas is made for later portions of the training / estimation sequence than for the initial portion of the training / estimation sequence containing the 11a/11g SIGNAL field.

32. A transmitter (252) according to claim 31, **characterized in that** said control means (254) controls the transmissions in such a way that the mapping of subcarriers to transmit antennas follows a predetermined sequence known at the receiver.

33. An transmitter (252) according to claim 31 or 32, **characterized in that** said control means (254) controls the transmissions in such a way that the mapping of subcarriers to transmit antennas (Txm) optimizes the possibility for the receiver to estimate the channel transfer functions.

34. An optimisation system (300) operable to optimise estimates of a channel transfer function at a receiver for improved operation for backward-compatible multiple input multiple output (MIMO) OFDM-based wireless LAN networks comprising m number of transmitting antennas and n number of receiving antennas, wherein m and n are integers and m, n ≥ 2, wherein the transmissions on each transmitting antenna during an initial training/channel estimating phase are separated in frequency, so that a given transmitting antenna is the only one transmitting on a given subcarrier at a given time, wherein said optimisation system (300) comprises a receiving means (350) connected to said receiving antennas, and a to said receiving means 8350) connected control means (310), **characterized in that** said control means (310) is operable to adapt an estimate updating process to a different subcarrier to transmit antenna mapping during later portions of the training/estimation sequence than for the initial portion of the training/estimation sequence containing the 11a/11g SIGNAL field.

35. An optimisation system (300) according to claim 34, **characterized in that** said optimisation system (300) also comprises a first estimating means (302) operable to make an initial estimate of said channel transfer function, based on the received symbols during said initial training/channel estimation phase, an to said first estimating means (302) connected estimate updating means (304) operable to update said estimate of said channel transfer function during said initial training/channel estimation phase, a to said estimate updating means (304) connected decoding means (306) operable to decode the received symbols, wherein said optimisation system (300) also comprises a remodulating means (308) connected to said decoding means (306) and said estimate updating means (304), which remodulating means (308) is operable to duplicate the modulation function performed at the transmitter, wherein said control means (310) also is connected to said decoding means (306) and said remodulating means (308).

36. An optimisation system (300) according to claim 34, **characterized in that** said control means (310) controls the estimate updating process in such a way that the mapping of subcarriers to transmit antennas follows a predetermined sequence used at the transmitter.

37. An optimisation system (300) according to any one of claims 34 - 36, **characterized in that** said control means (310) controls the estimate updating process in such a way as to optimize the estimate of the channel transfer functions.

38. An optimisation system (300) according to any one of claims 34 - 37, **characterized in that** said optimisation system (300) also comprises a demodulating means (312) connected to said estimate updating means (304) and to said decoding means (306), which demodulating means (312) is operable to demodulate the received symbols.

39. An optimisation system (300) according to claim 38, **characterized in that** said optimisation system (300) also comprises a correction means (314) connected to said decoding means (305), wherein said correction means (314) is operable to perform an error correction on said decoded symbols.

40. A method at a transmitter for optimising estimates of channel transfer functions at a receiver for improved operation for backward-compatible multiple input multiple output (MIMO) OFDM-based wireless LAN networks, comprising m number of transmitting antennas and n number of receiving antennas, wherein m and n are integers and m, n ≥ 2, wherein the method comprises the step:
- to separate the transmissions on each transmitting antenna in frequency during an initial training/channel estimation phase, so that a given transmitting antenna is the only one transmitting on a given subcarrier at a time; and
- to apply a different assignment of subcarriers to transmitting antennas for the later portions of the training / channel estimation sequence than for the initial portion containing the 11a/11g SIGNAL field.

41. A method for optimising estimates of channel transfer functions at a receiver according to claim 40, **characterized in that** said method comprises the step:
- to control the transmissions in such a way that the mapping of subcarriers to transmit antennas follows a predetermined sequence known at the receiver.

42. A method for optimising estimates of channel transfer functions at a receiver according to claim 40 or 41, **characterized in that** said method also comprises the step:
- to control the transmissions in such a way that the mapping of subcarriers to transmit antennas optimizes the possibility for the receiver to estimate the channel transfer functions.

43. At least one computer program product (202₁, ..., 202ₙ) directly loadable into the internal memory of at least one digital computer (200₁, ..., 200ₙ), comprising software code portions for performing the steps of Claim 40 when said at least one product (202₁, ..., 202ₙ) is/are run on said at least one computer (200₁, ..., 200ₙ).

44. A method for optimising estimates of channel transfer functions at a receiver for improved operation for backward-compatible multiple input multiple output (MIMO) OFDM-based wireless LAN networks, comprising m number of transmitting antennas and n number of receiving antennas, wherein m and n are integers and m, n ≥ 2, wherein the method comprises the steps:
- to receive an initial portion of the training / estimation sequence containing the 11a/11g SIGNAL field
- to obtain an initial estimate of the channel transfer function during the initial portion of the training / estimation sequence containing the 11a/11g SIGNAL field
- to receive a subsequent portion of the training / estimation sequence where the mapping of subcarriers to transmit antennae is changed; and
- to update the initial estimate of the channel transfer function

45. A method for optimising estimates of channel transfer functions at a receiver according to claim 44, **characterized in that** said method comprises the step:
- to control the updating of the channel transfer function estimates based on a predetermined sequence of mappings of subcarriers to transmit antennae known to be used at the transmitter.

46. A method for optimising estimates of channel transfer functions at a receiver according to claim 44 or 45, **characterized in that** said method comprises the step:
- to demodulate the received symbols.

47. A method for optimising estimates of channel transfer functions at a receiver according to claim 45 or 46, **characterized in that** said method comprises the step:
- to perform an error correction on said decoded symbols.

48. At least one computer program product (202₁, ..., 202ₙ) directly loadable into the internal memory of at least one digital computer (200₁, ..., 200ₙ), comprising software code portions for performing the steps of Claim 44 when said at least one product (202₁, ..., 202ₙ) is/are run on said at least one computer (200₁, ..., 200ₙ).

49. A transmitter (450) in a transmission system (460) operable to optimise estimates of channel transfer functions at a receiver for improved operation for backward-compatible multiple input multiple output (MIMO) OFDM-based wireless LAN networks, comprising m number of transmitting antennas (Txm) and n number of receiving antennas, wherein m and n are integers and m, n ≥ 2, wherein said transmitter (450) comprises a transmission means (450) capable of transmitting on a number of antennae (Txm), and a to said transmission means (450) connected control means (452) **characterised in that** said control means (452) is operable to control transmissions in such a way that the subcarriers used for a pilot tone transmission is changed from symbol to symbol.

50. A transmitter (450) in a transmission system (460) according to claim 49, **characterized in that** said control means (452) also is operable to decide in advance the pattern of which subcarriers and/or transmitting antennas are used for pilot tones in each symbol.

51. A transmitter (450) in a transmission system (460) according to claim 49 or 50, **characterized in that** said control means (452) also is operable to transmit known pilot tones on combinations of transmitting antenna (Txm) and subcarrier that have not been used during the initial training/channel estimating phase.

52. A receiver (400) in a transmission system (460) operable to optimise estimates of channel transfer functions at said receiver for improved operation for backward-compatible multiple input multiple output (MIMO) OFDM-based wireless LAN networks, comprising m number of transmitting antennas and n number of receiving antennas, wherein m and n are integers and m, n ≥ 2, wherein said receiver (400) comprises a first estimating means (402) operable to make an initial estimate of said channel transfer function, based on the received symbols during an initial training/channel estimation phase, an to said first estimating means (402) connected estimate updating means (404) operable to update said estimate of said channel transfer function, a to said estimate updating means (404) connected remodulating means (406) operable to duplicate the modulation function performed at the transmitter, **characterized in that** said receiver (400) also comprises a to said estimate updating means (404) connected pilot measuring means (408) and a control means (410) connected to said pilot measuring means (408) said estimate updating means (404) and said remodulating means (406), which control means (410) is operable to control the pilot measuring means such that the subcarriers used for a pilot tone reception is changed from symbol to symbol.

53. A receiver (400) in a transmission system (460) according to claim 52, **characterized in that** said control means (410) also is operable to decide in advance the pattern of which subcarriers and/or transmitting antennas are used for pilot tones in each symbol.

54. A method at a transmitter for allowing optimized estimates of channel transfer functions at a receiver for improved operation for backward-compatible multiple input multiple output (MIMO) OFDM-based wireless LAN networks, comprising m number of transmitting antennas and n number of receiving antennas, wherein m and n are integers and m, n ≥ 2, wherein the method comprises the steps:
- to transmit an initial training / channel estimating sequence during an initial training / channel estimation phase; and
- to control transmissions in subsequent data symbols in such a way that the subcarriers used for a pilot tone transmission is changed from symbol to symbol.

55. A method for optimising estimates of channel transfer functions according to claim 54, **characterized in that** said method also comprises the step:
- to decide in advance the pattern of which subcarriers and/or transmitting antennas are used for pilot tones in each symbol.

56. A method for optimising estimates of channel transfer functions according to claim 54 or 55, **characterized in that** said method also comprises the step:
- to transmit known pilot tones on combinations of transmitting antenna and subcarrier that not have been used during the initial training/channel estimating phase.

57. At least one computer program product (202₁, ..., 202ₙ) directly loadable into the internal memory of at least one digital computer (200₁, ..., 200ₙ), comprising software code portions for performing the steps of Claim 54 when said at least one product (202₁, ..., 202ₙ) is/are run on said at least one computer (200₁, ..., 200ₙ).

58. A method at a receiver for producing optimized estimates of channel transfer functions for improved operation in a multiple input multiple output (MIMO) OFDM-based wireless LAN network, comprising m number of transmitting antennas and n number of receiving antennas, wherein m and n are integers and m, n ≥ 2, wherein the method comprises the steps:
- to make a initial estimate of said channel transfer function, based on the received symbols during said initial training/channel estimating phase;
- to receive the transmitted pilot tones from the subcarriers used at the transmitter;
- to duplicate the modulation function performed at the transmitter; and
- to update said estimate of said channel transfer function using the received pilot tones.

59. At least one computer program product (202₁, ..., 202ₙ) directly loadable into the internal memory of at least one digital computer (200₁, ..., 200ₙ), comprising software code portions for performing the steps of Claim 58 when said at least one product (202₁, ..., 202ₙ) is/are run on said at least one computer (200₁, ..., 200ₙ).
